# EUROPEAN PATENT APPLICATION

(11) **EP 3 537 357 A1**
(43) Date of publication of application: **11.09.2019**
(21) Application number: 19159955.4
(22) Date of filing: 28.02.2019
(51) Int. Cl.: G06Q 20/10, G06Q 20/32

(54) **PROGRAM FOR SUPPORTING SIMULATION, METHOD FOR SUPPORTING SIMULATION, AND SIMULATION DEVICE**

(30) Priority: 05.03.2018 JP 2018039097
(71) Applicant: FUJITSU LIMITED, Kanagawa 211-8588 (JP)
(72) Inventor: Wang, Xin, Kanagawa, 211-8588 (JP); Koda, Shiho, Kanagawa, 211-8588 (JP); Yuki, Hiroko, Kanagawa, 211-8588 (JP); Tatsuma, Kazuki, Kanagawa, 211-8588 (JP)
(74) Representative: Hoffmann Eitle

(57) **Abstract**

A simulation device (40) according to an embodiment determines the presence or absence of first bank account information associated with a first user and a first purpose, by referring to a storage (42) storing therein bank account information in which a user, the balance of a bank account, and a purpose of the savings are associated with one another. Upon determination of the presence of the first bank account information, the simulation device (40) allocates a first balance included in the first bank account information for a down payment of a payment simulation run on the first purpose.

## Description

### FIELD

The embodiments discussed herein are related to a program for supporting bank account opening, a program for providing bank account information, a method for supporting bank account opening, a method for providing bank account information, a financial transaction management device, a program for supporting a simulation, and a method for supporting a simulation, a simulation device.

### BACKGROUND

Techniques relating to financial transactions using a user terminal have been known. For example, such a technique is well known that sets a loan using a user terminal. For another example, such a technique is also well known that presents quotations of provided services and information relating to loans on a website. Such a technique is further known that presents a recommended credit line in application of credit using a mobile terminal.

The techniques are described in Japanese Laid-open Patent Publication No. 2004-078293, Japanese Laid-open Patent Publication No. 2004-139346, and Japanese Laid-open Patent Publication No. 2014-225253.

With those techniques, however, a user may have difficulty in skipping input of conditions to run a simulation.

Accordingly, it is an object in one aspect of an embodiment of the invention to allow a user to skip input of simulation conditions.

### SUMMARY

According to an aspect of the embodiments, a program for supporting bank account opening causes a computer to execute a process including: in response to a demand to open a bank account for a plurality of users, requesting a financial system to open a first bank account for a first user of the users and requesting the financial system or another financial system to open a second bank account for a second user of the users.

According to an embodiment of the invention, it is possible to allow a user to skip input of simulation conditions.

### BRIEF DESCRIPTION OF DRAWINGS

FIG. 1 is an illustrative drawing of a financial transaction management system according to an embodiment;
FIG. 2 is a block diagram of an exemplary functional configuration of a user terminal according to the embodiment;
FIG. 3 is a block diagram of an exemplary functional configuration of a financial transaction management device according to the embodiment;
FIG. 4 is an illustrative drawing of savings box information;
FIG. 5 is an example sequence diagram that illustrates processing to open a bank account;
FIG. 6 is an example drawing of a savings box selection page;
FIG. 7 is an example drawing of a savings box setting window;
FIG. 8 is an example drawing of a portal page;
FIG. 9 is an example sequence diagram that illustrates processing to provide bank account information;
FIG. 10 is an example drawing of a portal page;
FIG. 11 is an illustrative drawing of a simulation system according to the embodiment;
FIG. 12 is a block diagram of an exemplary functional configuration of a simulation device according to the embodiment;
FIG. 13 is an illustrative drawing of savings box information;
FIG. 14 is an example drawing of a house information page;
FIG. 15 is an example drawing of a chat window;
FIG. 16 is another example drawing of a chat window;
FIG. 17 is an example flowchart that illustrates processing to run a simulation;
FIG. 18 is an example flowchart that illustrates processing to acquire a balance as a down payment;
FIG. 19 is an illustrative drawing of car information;
FIG. 20 illustrates an exemplary car information page;
FIG. 21 illustrates another exemplary car information page;
FIG. 22 illustrates still another exemplary car information page;
FIG. 23 is an example flowchart that illustrates processing to run a simulation;
FIG. 24 is an example flowchart that illustrates processing to create AR display; and
FIG. 25 is a block diagram of an exemplary hardware configuration of the financial transaction management device according to the embodiment.

### DESCRIPTION OF EMBODIMENTS

Preferred embodiments will be explained with reference to accompanying drawings. In the embodiment, like reference numerals indicate like components having the same functions, and description of such components will not be repeated. The bank account opening support program, the bank account information providing program, the method for supporting bank account opening, the method for providing bank account information, and the financial transaction management device described in the embodiment are only examples, and not intended to limit the embodiment. The following embodiments are allowed to be combined as appropriate without deviating the intentions.

A financial transaction management system according to the embodiments collectively manages bank accounts of a plurality of users. For example, the financial transaction management system according to the embodiment makes a request for processing to financial institutions and provides bank account information to users.

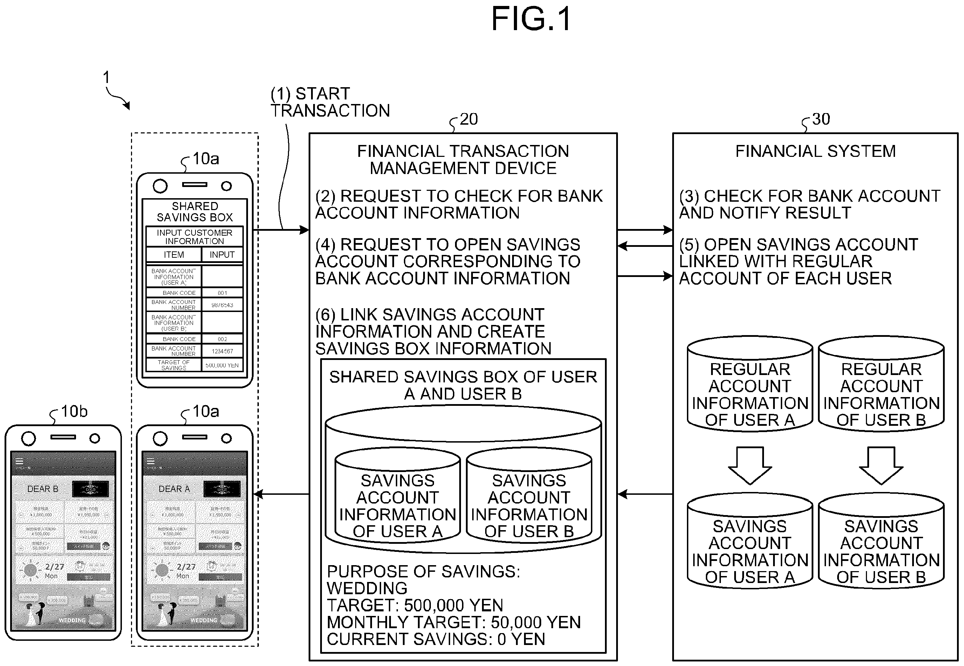

FIG. 1 is an illustrative drawing of the financial transaction management system according to the embodiment. As illustrated in FIG. 1, a financial transaction management system 1 includes a user terminal 10a, a user terminal 10b, and a financial transaction management device 20 connected with each user terminal. The financial transaction management device 20 is connected with a financial system 30. In the financial transaction management system 1, the user terminal 10a, the user terminal 10b, the financial transaction management device 20, and the financial system 30 are connected with one another via a communication network such as the Internet and a local area network (LAN).

The user terminal 10a and the user terminal 10b can be implemented by a personal computer (PC), a smartphone, a tablet terminal, and other devices. The financial transaction management device 20 can be implemented by a server device on a cloud infrastructure. The financial system 30 can be implemented by a server device having accounting system host functions. The user terminal 10a and the user terminal 10b will be simply described as a user terminal 10 unless otherwise separately mentioned.

FIG. 1 illustrates an example in which a user (A) using the user terminal 10a and another user (B) using the user terminal 10b take out own money and jointly make a deposit for wedding using the financial transaction management system 1. In this example, the user A and the user B can efficiently make a request for processing to a bank institution and share information by using the financial transaction management system 1.

As illustrated in FIG. 1, the user terminal 10a transmits data input on each item by the user A to the financial transaction management device 20 and requests transactions. The user terminal 10a includes, for example, bank account information of the user A, bank account information of the user B, a purpose of the savings, a monthly target of the savings, and a final goal of the savings. The bank account information includes a bank code, a bank account number, and other information.

The financial transaction management device 20 refers to the financial system 30 for the presence or absence of the bank accounts included in the transmitted bank account information pieces. The financial system 30 confirms the presence of the asked bank accounts and notifies the financial transaction management device 20 of the results. When the financial transaction management device 20 is notified of the presence of the bank accounts, the financial transaction management device 20 asks the financial system 30 to open a savings account for each bank account information piece.

The financial system 30 provides processing to open a savings account linked to a regular account in each of the bank account information pieces. In opening the bank accounts, the financial system 30 creates savings account information of the user A linked to regular bank account information of the user A and creates savings account information of the user B linked to regular bank account information of the user B.

A regular account and a savings account as described above are, respectively, an existing bank account and a bank account newly created in a manner linked to the existing account, and these bank accounts are not limited to the types of bank account used in financial institutions. For example, the regular account and the savings account may be any type of account such as a savings account, a time deposit account, and a foreign currency time deposit account.

The financial transaction management device 20 creates savings box information linked to savings account information of the user A and savings account information of the user B, which are obtained from the financial system 30. The savings box information includes a purpose of the savings, a monthly target of the savings, a final goal of the savings, and the current amount of the savings. The current amount of savings is, for example, the sum of balances included in the savings account information of the user A and the savings account information of the user B. The financial transaction management device 20 acquires the savings account information pieces from the financial system 30 at a certain timing and updates the savings box information based on the acquired information pieces.

The financial transaction management device 20 provides the savings box information to the user terminal 10. The user A and the user B view the savings box information using a dedicated application installed to the user terminal 10, a web browser, and other methods.

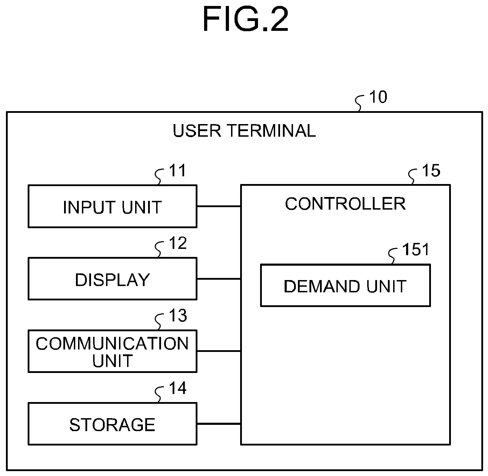

FIG. 2 is a block diagram of an exemplary functional configuration of a user terminal according to the embodiment. As illustrated in FIG. 2, the user terminal 10 includes an input unit 11, a display 12, a communication unit 13, a storage 14, and a controller 15.

The input unit 11 is a user interface (UI) receiving an input operation of a user through, for example, an input device. The display 12 causes, for example, a monitor to display a screen. The communication unit 13 establishes data communication with other external devices via a network. Examples of the storage 14 include a semiconductor memory storing therein various kinds of information. The controller 15 controls various operations of the user terminal 10.

The controller 15 has a demand unit 151. The controller 15 can be implemented by a central processing unit (CPU), a micro processing unit (MPU), and other devices. The controller 15 can also be implemented by hard-wired logic such as an application specific integrated circuit (ASIC) and a field programmable gate array (FPGA).

The demand unit 151 sends user identification information to the financial transaction management device 20 and demands that the financial transaction management device 20 execute user authentication processing. The user identification information includes, for example, a user ID and a password. The user identification information may be input by a user or may be stored in the storage 14.

The demand unit 151 further demands that the financial transaction management device 20 execute a process of making a request to open a bank account and to start financial transactions. For this demand, the demand unit 151 sends information relating to bank account opening and financial transactions to the financial transaction management device 20. The information relating to bank account opening and financial transactions includes, for example, a bank account number of a regular account, a purpose of the savings, a target of the savings, the amount for transfer, the timing of transfer, and shared information. The shared information includes a bank account number of a regular account, the amount for transfer, and the timing of transfer, of a user sharing information relating to the savings. The information relating to bank account opening and financial transactions may be input by a user or may be stored in the storage 14.

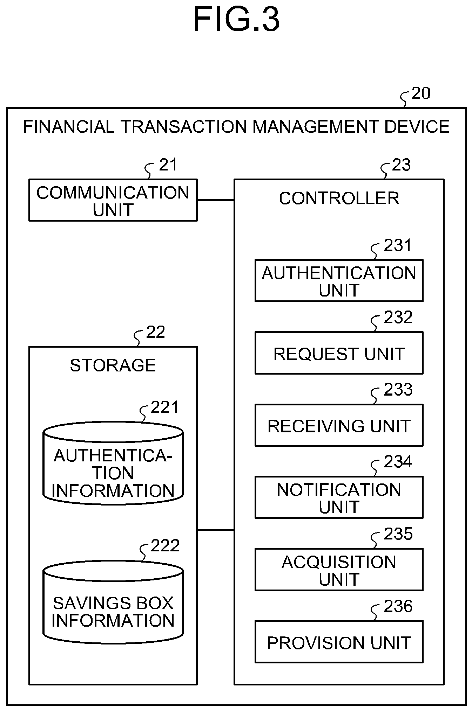

FIG. 3 is a block diagram of an exemplary functional configuration of a financial transaction management device according to the embodiment. As illustrated in FIG. 3, the financial transaction management device 20 includes a communication unit 21, a storage 22, and a controller 23.

The communication unit 21 establishes data communication with other external devices via a network. Examples of the storage 22 include a semiconductor memory storing therein various kinds of information such as authentication information 221 and savings box information 222. The authentication information 221 includes a user ID and a password associated with the user ID. The savings box information 222 is information in which savings account information pieces of a plurality of users are associated with one another. The savings box information 222 may be savings account information of one user.

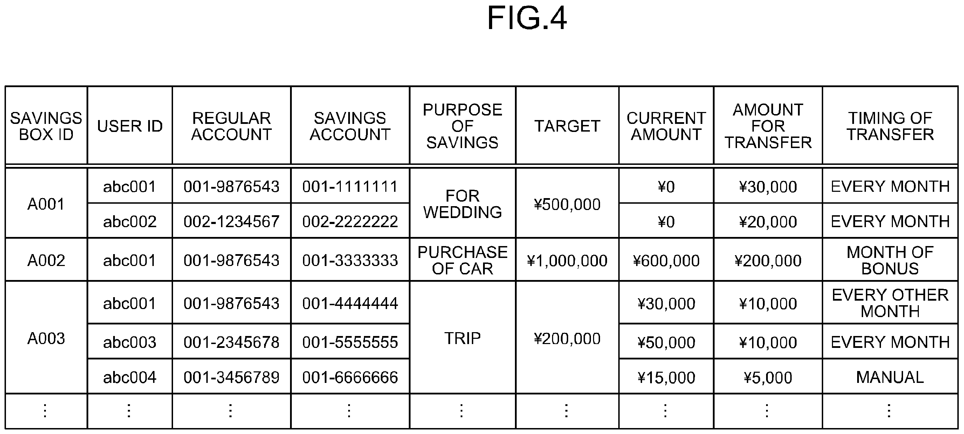

FIG. 4 is an illustrative drawing of the savings box information. As illustrated in FIG. 4, the savings box information 222 includes, for each savings box ID, a user ID, a regular account, a savings account, a purpose of the savings, a target of the savings, the current amount of the savings, the amount for transfer, the timing of transfer, and others. As illustrated in FIG. 4, in the savings box information 222, for example, information of a savings account having the bank account number of "001-1111111" is associated with information of a savings account having the bank account number of "002-2222222" by a savings box ID "A001". As described above, the storage 22 stores therein first bank account information and second bank account information in a manner associated with each other.

The controller 23 controls various kinds of operations of the financial transaction management device 20. The controller 23 includes an authentication unit 231, a request unit 232, a receiving unit 233, a notification unit 234, an acquisition unit 235, and a provision unit 236. The controller 23 can be implemented by a CPU, an MPU, and other devices. The controller 23 can also be implemented by hard-wired logic such as an ASIC and an FPGA.

The authentication unit 231 authenticates a user based on user identification information transmitted from a user terminal. Specifically, the authentication unit 231 authenticates a user by determining whether a combination of a user ID and a password included in the user identification information is stored in the authentication information 221 in a manner associated with each other.

The request unit 232 requests the financial system 30 to open a first bank account for a first user of a plurality of users, in response to a demand for bank account opening for the users. The request unit 232 further requests the financial system 30 or another financial system to open a second bank account for a second user of the users. The demand for bank account opening from a plurality of users may be made with each user operating the user terminal 10, or with a representative of those users operating the user terminal 10. The financial system 30 is an example of a first financial system, and another financial system is an example of a second financial system.

The receiving unit 233 receives settings to create the savings box information 222 based on information sent from the user terminal 10. The receiving unit 233 receives setting of a target for the sum of the balance of the first bank account and the balance of the second bank account. On each of the first bank account and the second bank account, the receiving unit 233 further receives setting of, for example, the bank account number of a regular account to be associated, a purpose of the savings, the amount for transfer, and the timing of transfer.

The notification unit 234 notifies the user terminal 10 of the result of authentication by the authentication unit 231. The notification unit 234 notifies a notified party corresponding to the first user and/or the second user that the combined balances of the first bank account and the second bank account achieve a preset target, upon detection of the achievement.

In response to a demand, the acquisition unit 235 refers to the storage 22 storing therein association information to associate a bank account of the first user managed by the financial system 30 with a bank account of the second user managed by the financial system 30 or another different financial system, and acquires information relating to the bank account of the first user from the financial system 30 and information relating to the bank account of the second user from the financial system 30 or the different financial system.

The provision unit 236 provides information in which the first bank account information and the second bank account information are combined, in response to a demand. The information in which the first bank account information and the second bank account information are combined includes, for example, information of the sum of the balances of the first bank account and the second bank account. The information, in which the first bank account information and the second bank account information are combined, provided by the provision unit 236 can be viewed by both the first user and the second user.

The provision unit 236 provides the information relating to the bank account of the first user and the information relating to the bank account of the second user, acquired by the acquisition unit 235, to the demanding party, or provides information in which the acquired information relating to the bank account of the first user and information relating to the bank account of the second user are combined, to the requesting party. The provision unit 236 may provide the first bank account information and the second bank account information separately without combining.

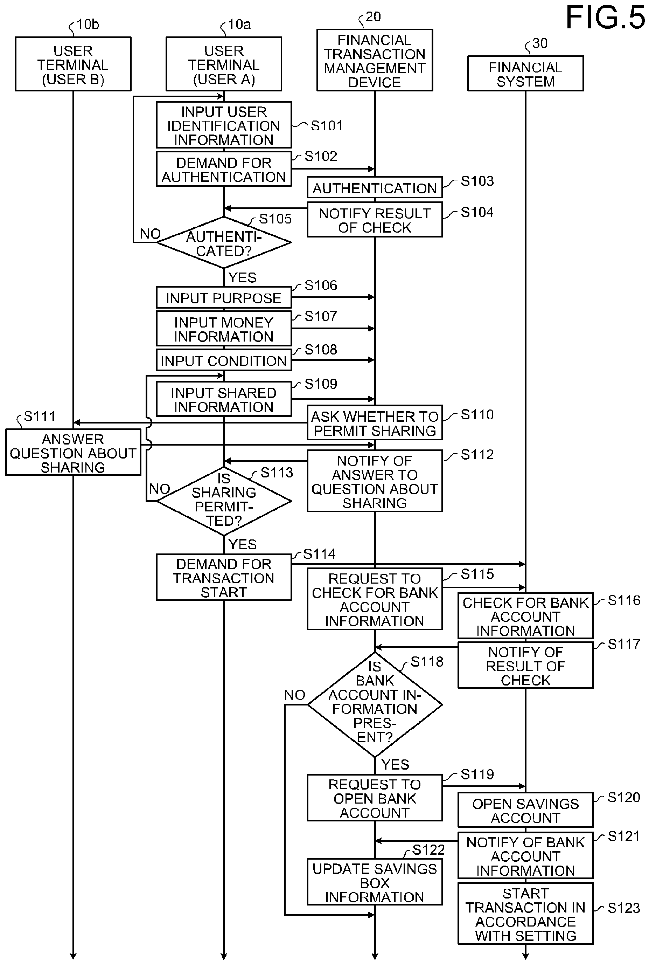

FIG. 5 is an example sequence diagram that illustrates processing to open a bank account. FIG. 5 illustrates an example in which the user A and the user B take out own money and jointly make a deposit for a certain purpose using the financial transaction management device 20.

As illustrated in FIG. 5, the user terminal 10a receives an input of user identification information from the user A (S101). The user identification information includes a user ID and a password of the user A. The user A is an example of a first user. The demand unit 151 of the user terminal 10a sends the user identification information to the financial transaction management device 20 to demand authentication (S102).

In response to the demand for authentication from the user terminal 10a, the authentication unit 231 of the financial transaction management device 20 authenticates the user using the user ID and the password included in the user identification information (S103). The notification unit 234 notifies the user terminal 10a of the result of authentication by the authentication unit 231 (S104).

If the notification unit 234 notifies the user terminal 10a of failure of authentication by the authentication unit 231 (No at S105), the user terminal 10a stops subsequent processing and stands by for the next input of user identification information. If the notification unit 234 notifies the user terminal 10a of success of authentication by the authentication unit 231 (Yes at S105), the display 12 displays a window to receive data input for each preset item.

The display 12 may initially display a portal page, a menu window, or the like in response to authentication and may display a window to receive data input for preset items in response to a certain operation by the user. In this example, a touchscreen of a tablet terminal is used for the input unit 11 and the display 12.

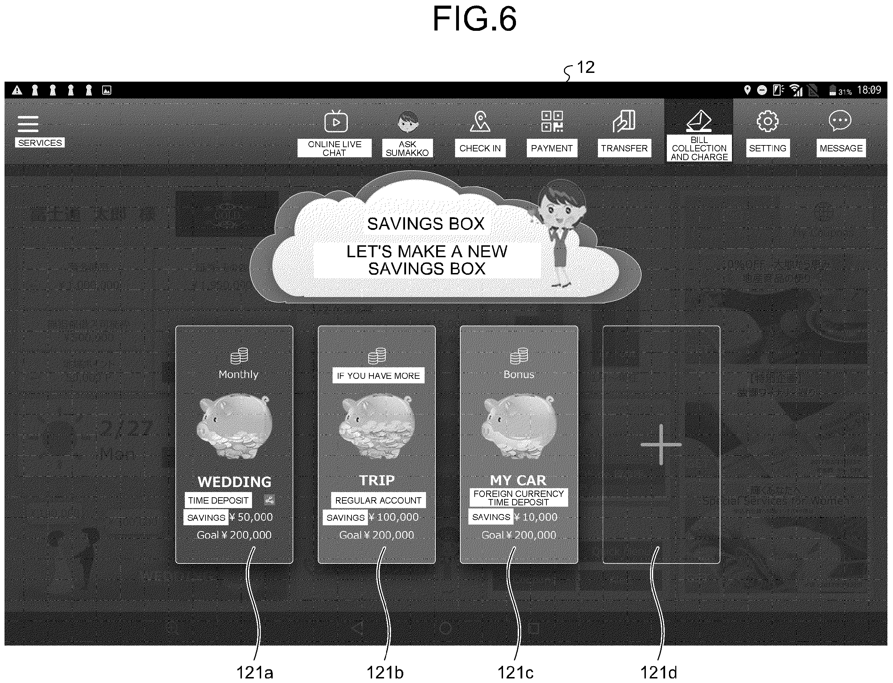

The display 12 displays the savings box selection page. FIG. 6 is an example drawing of a savings box selection page. As illustrated in FIG. 6, the display 12 displays icons 121a, 121b, 121c, and 121d on the savings box selection page. The icons 121a, 121b, and 121c correspond to created savings box information 222. A tap on the icon 121a, 121b, or 121c causes the display 12 to display, for example, a window including preset items of the savings box information 222 corresponding to the tapped icon and a maintenance window.

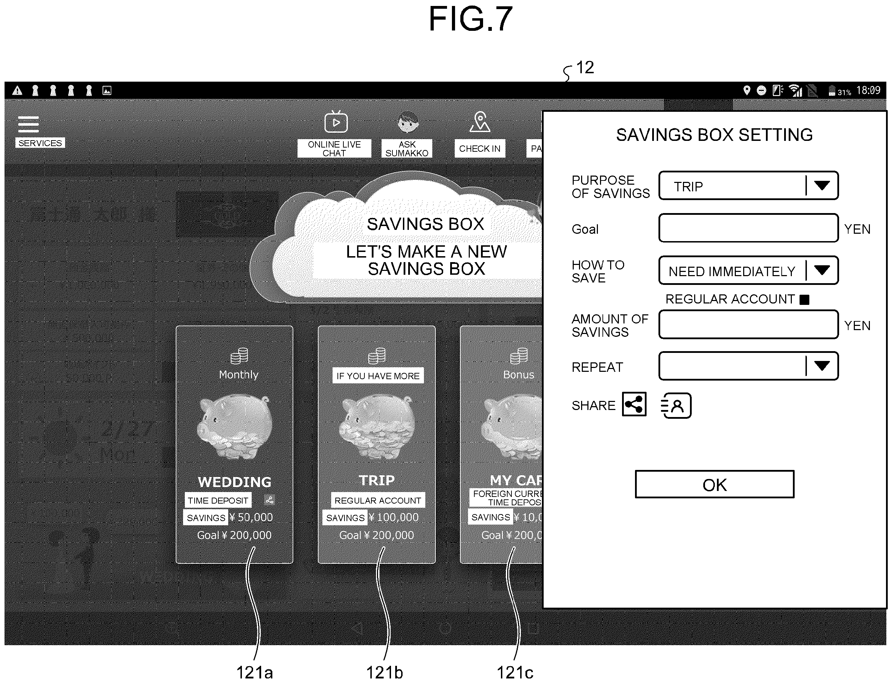

In response to a tap on the icon 121d, the display 12 displays a window to receive data input for preset items, that is, a savings box setting window. FIG. 7 is an example drawing of the savings box setting window. As illustrated in FIG. 7, the display 12 may display the savings box setting window as a pop-up window on the savings box selection page. The savings box setting window receives data input for "Purpose of savings", "Goal", "How to save", "Amount of savings", "Repeat", "Share", and other preset items.

The user terminal 10a receives data input for the purpose of the savings in the savings box setting window (S106). The purpose of the savings is input to "Purpose of savings" in the savings box setting window. The purpose of the savings corresponds to the purpose of the savings in the savings box information 222. The financial transaction management device 20 may acquire a savings model for the input purpose of the savings from open data or other sources and, based on the savings model, may present recommended settings including, for example, the amount of savings to the user.

The user terminal 10a receives data input for information relating to the amount of money in the savings box setting window (S107). The information pieces relating to the amount of money are input to the items of "Goal" and "Amount of savings" in the savings box setting window. Conditions correspond to a target of the savings and the amount for transfer in the savings box information 222.

The user terminal 10a further receives data input relating to conditions in the savings box setting window (S108). Such a condition is input to the item "Repeat" in the savings box setting window and also corresponds to the timing of transfer in the savings box information 222.

The user terminal 10a receives data input for shared information in the savings box setting window (S109). The shared information includes a bank account number of a regular account, the amount for transfer, and the timing of transfer, of a user sharing the savings box information 222. For example, as a user sharing the savings box information 222, a user ID of the user B is input. The user B is an example of a second user.

The receiving unit 233 of the financial transaction management device 20 receives the shared information input to the user terminal 10a, and the notification unit 234 notifies the user terminal 10b that the user B has been determined to be a shared user by the user A and questions whether to permit the sharing (S110). The user terminal 10b displays a screen to receive data input of an answer about the sharing and receives data input to the screen from the user B. The user terminal 10b notifies the financial transaction management device 20 of the answer about the sharing (S111). The notification unit 234 of the financial transaction management device 20 notifies the user terminal 10a of the answer about the sharing from the user terminal 10b (S112).

If the notification unit 234 notifies the user terminal 10a of the result that sharing is not permitted (No at S113), the user terminal 10a stands by for the next input of shared information. If the notification unit 234 notifies the user terminal 10a of the result that sharing is permitted (Yes at S113), the demand unit 151 of the user terminal 10a sends the data input for each preset item to the financial transaction management device 20 and demands that the financial transaction management device 20 start transactions (S114).

In response to the demand for start of transactions from the user terminal 10a, the request unit 232 of the financial transaction management device 20 requests the financial system 30 to check for account information of a regular account of the user A (S115). The bank account information of a regular account of the user A may be input to the user terminal 10a or may be prestored in the financial transaction management device 20 in a manner associated with a user ID.

The financial system 30 checks for the bank account information (S116) and notifies the financial transaction management device 20 of the result (S117). If the absence of the bank account information is notified (No at S118), the financial transaction management device 20 stops subsequent processing. If the presence of the bank account information is notified (Yes at S118), the request unit 232 of the financial transaction management device 20 requests the financial system 30 to open a savings account (S119). The request unit 232 provides information to be used for financial transactions between the regular account and the savings account to the financial system 30, based on the data of each preset item input by the user terminal 10a. For example, the request unit 232 notifies the financial system 30 of the timing of transfer and the amount of transfer from the regular account to the savings account.

In response to a request to open a bank account, the financial system 30 opens a savings account (S120) and provides bank account information of the opened savings account to the financial transaction management device 20 (S121). The financial transaction management device 20 updates the savings box information 222 based on the bank account information of the savings account provided from the financial system 30 (S122). The financial system 30 conducts financial transactions between the regular account and the savings account based on the information provided from the financial transaction management device 20 (S123).

As illustrated in FIG. 4, the savings box information 222 includes bank account information of the user A and bank account information of the user B in a manner associated with each other. A savings box ID of the savings box information 222 is an example of association information. For example, the savings box ID "A001" associates bank account information of the user A the user ID of which is "abc001" with bank account information of the user B the user ID of which is "abc002".

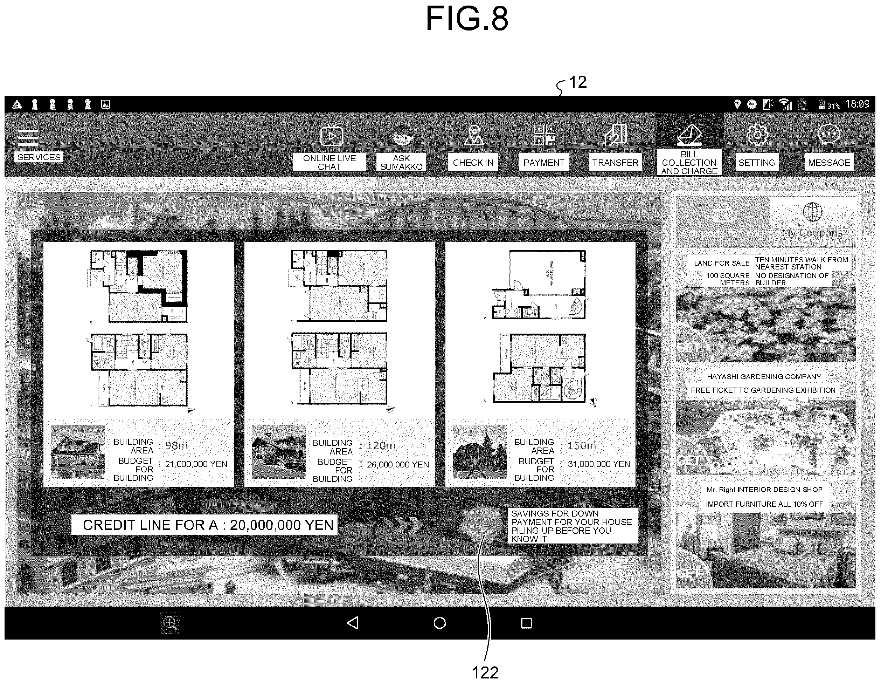

The display 12 may display a portal page linked with the current location of the user terminal 10a. FIG. 8 is an example drawing of such a portal page. As illustrated in FIG. 8, for example, if the current location of the user terminal 10a indicates a place where a certain event such as a housing exhibition is held, the display 12 may display information of the event and display an icon 122 to open the savings box selection page. In response to a tap on the icon 122, the display 12 displays the savings box selection page.

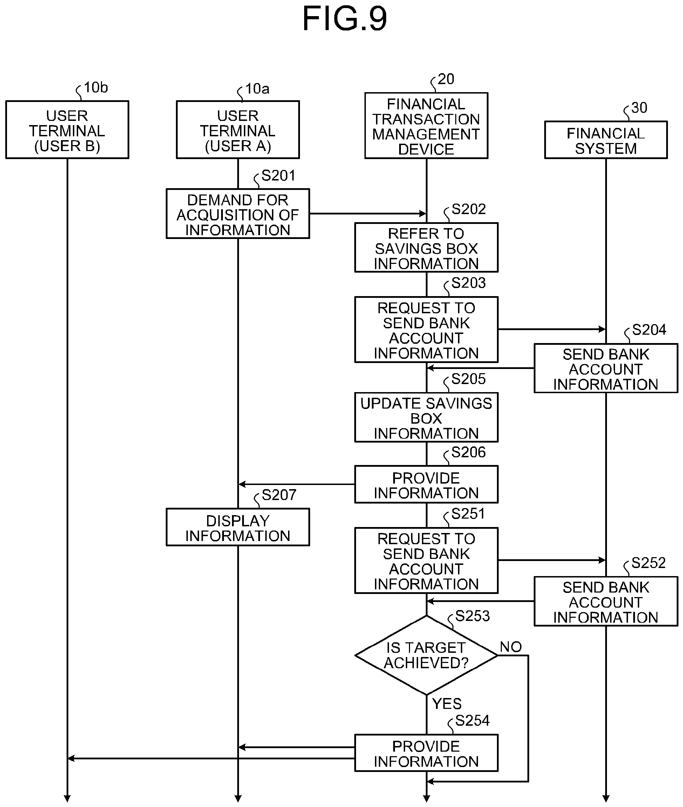

FIG. 9 is an example sequence diagram that illustrates processing to provide bank account information. As illustrated in FIG. 9, the demand unit 151 of the user terminal 10a demands that the financial transaction management device 20 acquire information (S201). The demand unit 151 may demand acquisition of information in response to a certain operation of the user A or may demand acquisition of information in demanding for authentication to the financial transaction management device 20.

The request unit 232 of the financial transaction management device 20 refers to the savings box information 222 (S202) and requests the financial system 30 to send bank account information (S203). The financial system 30 sends the bank account information to the financial transaction management device 20 (S204). Based on the bank account information of a savings account sent from the financial system 30, the financial transaction management device 20 updates the savings box information 222 (S205). For example, the financial transaction management device 20 updates the current amount included in the savings box information 222 to the balance of the savings account.

The provision unit 236 provides the savings box information 222 to the user terminal 10a (S206). The display 12 of the user terminal 10a displays the savings box information 222 provided by the provision unit 236 on a portal page (S207).

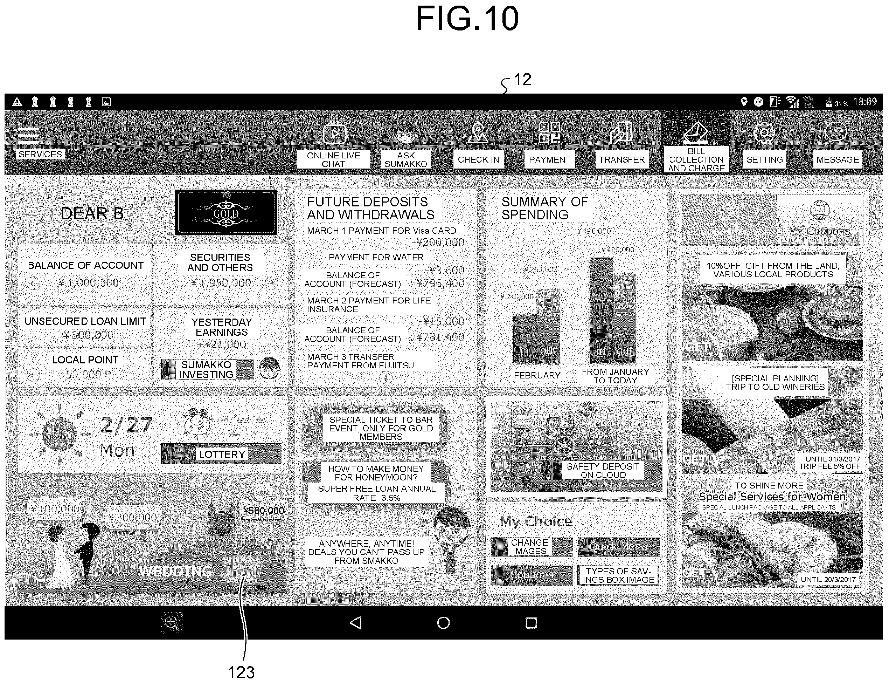

FIG. 10 is an example drawing of a portal page. As illustrated in FIG. 10, the portal page displays an icon 123. In response to a tap on the icon 123, the display 12 displays the savings box selection page. Furthermore, a target "500,000 Yen", the current amounts of respective users "100,000 Yen" and "300,000 Yen", which are included in the savings box information 222, are displayed near the icon 123. The current amount of each user may be separately displayed as illustrated in FIG. 10, or the sum of the amounts may be displayed.

Even with no requests from the user terminal 10, the financial transaction management device 20 requests the financial system 30 to provide bank account information at a predetermined timing (S251). The financial system 30 provides the bank account information to the financial transaction management device 20 (S252). The provision unit 236 of the financial transaction management device 20 compares the target of the savings box information 222 with the sum of the balances of the savings accounts. If the sum of the balances of the savings accounts is found to achieve the preset target (Yes at S253), the provision unit 236 informs the user terminal 10a and the user terminal 10b that the savings achieve the target (S254). Unless the sum of the balances of the savings accounts is found to achieve the preset target (No at S253), the provision unit 236 provides no information to the user terminal 10.

As described above, the financial transaction management device 20 requests the financial system 30 to open a first bank account for a first user of a plurality of users, in response to a demand for bank account opening for the users. The financial transaction management device 20 further requests the financial system 30 or another financial system to open a second bank account for a second user of the users. This manner allows the financial transaction management device 20 to collectively manage bank accounts of a plurality of users.

The financial transaction management device 20 is capable of storing therein the first bank account information and the second bank account information in the storage 22 in a manner to associate the information pieces with each other. The financial transaction management device 20 provides information in which the first bank account information and the second bank account information are combined, upon demand. This manner allows the financial transaction management device 20 to manage a plurality of bank accounts as a single virtual bank account.

The information in which the first bank account information and the second bank account information are combined may be information of the sum of the balances of the first bank account and the second bank account. This manner allows the financial transaction management device 20 to manage the virtual bank account shared by a plurality of users.

The financial transaction management device 20 is capable of receiving setting of a target for the sum of the balances of the first bank account and the second bank account. When the sum of the balances of the first bank account and the second account is found to achieve a preset target, the financial transaction management device 20 notifies a notified party corresponding to the first user and/or the second user of the achievement. In this manner, when a plurality of users make a deposit using a shared virtual bank account, the financial transaction management device 20 can manage the virtual bank account.

The financial transaction management device 20 can refer to the storage 22 storing therein association information for associating a bank account of the first user managed by the first financial system with a bank account of the second user managed by the first financial system or the second financial system, upon demand. The financial transaction management device 20 is capable of acquiring bank account information of the first user from the first financial system and acquiring bank account information of the second user from the first financial system or the second financial system. The financial transaction management device 20 provides the acquired bank account information of the first user and bank account information of the second user to the demanding party, or provides information in which the acquired bank account information of the first user and bank account information of the second user are combined to the demanding party. This manner allows the financial transaction management device 20 to efficiently provide bank account information to a plurality of users taking out own money and jointly making a deposit. This manner therefore allows the financial transaction management device 20 to collectively manage bank accounts of a plurality of users.

### Embodiment of Simulation System

Information stored in the financial transaction management device 20 can be used for a payment simulation. A simulation support program, a method for supporting a simulation, and a simulation device according to an embodiment will now be described with reference to the drawings. In the embodiment, like reference numerals indicate like components having the same functions, and description of such components will not be repeated. The simulation support program, the method for supporting a simulation, and the simulation device, described in the following embodiment, are only examples and not intended to limit the embodiment. The following embodiments are allowed to be combined as appropriate without deviating the intentions.

A simulation system according to the embodiment is capable of computation relating to loans based on information relating to a user and preset conditions. For example, the simulation system according to the embodiment computes the amount of money that a user purchasing a house can borrow and the interest rate.

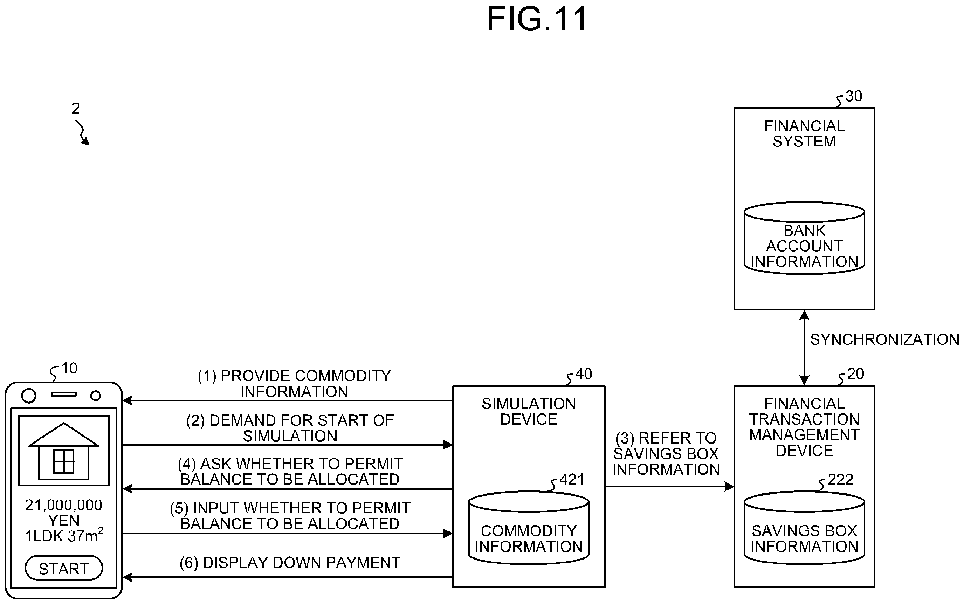

FIG. 11 is an illustrative drawing of the simulation system according to the embodiment. As illustrated in FIG. 11, a simulation system 2 includes the user terminal 10, a simulation device 40, and the financial transaction management device 20.

In the simulation system 2, the simulation device 40 is communicably connected with the user terminal 10 and the financial transaction management device 20 via a communication network such as the Internet and a LAN. The financial transaction management device 20 is connected with the financial system 30 with bank account information synchronized therebetween. The basic configurations of the user terminal 10, the financial transaction management device 20, and the financial system 30 are the same as those having been described.

Setting a down payment of a loan using the simulation system 2 will now be described as an example with reference to FIG. 11. As illustrated in FIG. 11, the simulation device 40 stores information of a commodity as commodity information 421. For example, if the commodity is a house, the simulation device 40 stores information of the house such as the location, the floor plan, and the price.

As illustrated in FIG. 11, the simulation device 40 provides information of a commodity acquired from the commodity information 421 to the user terminal 10. The user terminal 10 demands that the simulation device 40 start a simulation.

The simulation device 40 refers to the savings box information 222 of the financial transaction management device 20 and determines the presence or absence of a balance allowed to be allocated for a down payment. The balance allowed to be allocated for a down payment may be the current amount in the savings box information 222 of the user of the user terminal 10, specifically, the savings box information 222 in which a purpose of the savings is purchase of the commodity the information of which is being provided. The simulation device 40 asks the user terminal 10 whether to permit the balance of the savings box information 222 to be allocated for the down payment.

The user terminal 10 inputs whether to allocate the balance for the down payment. The simulation device 40 displays the down payment based on the input from the user terminal 10. For example, in response to an input of the user terminal 10 permitting the balance to be allocated for the down payment, the simulation device 40 displays the balance of the savings box information 222 as a down payment. In response to an input of the user terminal 10 not permitting the balance to be allocated for the down payment, the simulation device 40 displays the amount manually input or any amount as the down payment instead of displaying the balance of the savings box information 222 as the down payment.

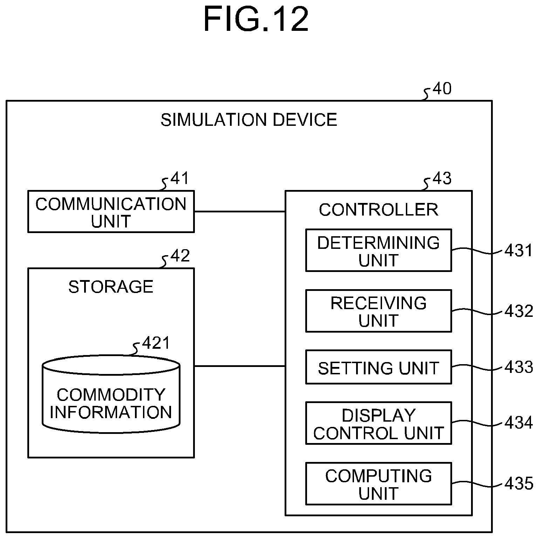

FIG. 12 is a block diagram that illustrates an exemplary functional configuration of a simulation device according to the embodiment. As illustrated in FIG. 12, the simulation device 40 includes a communication unit 41, a storage 42, and a controller 43.

The communication unit 41 establishes data communication with other external devices via a network. Examples of the storage 42 include a semiconductor memory storing therein various kinds of information such as the commodity information 421. The commodity information 421 includes the name, the price, and other elements of a commodity. For example, if the commodity is a house, the commodity information 421 includes the location, the floor plan, the price, and other information pieces relating to the house.

The controller 43 controls various operations of the simulation device 40. The controller 43 includes a determining unit 431, a receiving unit 432, a setting unit 433, a display control unit 434, and a computing unit 435. The controller 43 can be implemented by a CPU, an MPU, and other devices. The controller 43 can also be implemented by hard-wired logic such as an ASIC and an FPGA.

The determining unit 431 refers to the storage 22 storing therein bank account information, in which a user, the balance of a bank account, and a purpose of the savings are associated with one another, and determines the presence or absence of first bank account information associated with a first user and a first purpose. The bank account information is, for example, information relating to a bank account of a user acquired from the storage 22 storing therein the savings box information 222. The first purpose is, for example, a purpose of the savings in the savings box information 222.

The determining unit 431 is capable of determining the presence or absence of the first bank account information associated with a plurality of users and the first purpose. For example, in the presence of shared bank account information associated with two users, the user A and the user B, instead of bank account information associated with one user, the user A, the determining unit 431 can determine the shared bank account information to be the first bank account information.

The receiving unit 432 receives an input indicative of whether to permit a first balance to be allocated for a down payment of a payment simulation run on the first purpose. For example, the receiving unit 432 is capable of receiving an input through a message of the user input to a chat box.

If the determining unit 431 determines the presence of the first bank account information, the setting unit 433 allocates the first balance included in the first bank account information for the down payment of the payment simulation run on the first purpose. For example, the first balance is the current amount in the savings box information 222.

The setting unit 433 is further capable of allocating the sum of the first balance and interest calculated at an adapted interest rate for the down payment. The setting unit 433 allocates the sum of the first balance included in the first bank account information, the presence of which has been determined by the determining unit 431, and interest calculated at the adapted interest rate for the down payment of the payment simulation run on the first purpose.

The setting unit 433 may acquire an interest rate for each user prestored in the financial system 30 or in the financial transaction management device 20. The setting unit 433 may calculate the interest rate using a certain formula based on input conditions.

The setting unit 433 may stop allocating the first balance for the down payment without permission of the user, even in the presence of the first bank account information. In this case, when the receiving unit 432 receives an input indicative of permission to allocate the first balance for the down payment, the setting unit 433 allocates the first balance acquired from the storage 22 for the down payment of the simulation.

Without the presence of the first bank account information or without permission of the user to allocate the first balance for the down payment, the setting unit 433 allocates the amount of money input to the interface for the down payment of the simulation.

The first bank account information may be shared by a plurality of users. If the first bank account information is determined to be present, the setting unit 433 allocates the sum of the balances, included in the first bank account information, of the bank accounts of respective users for the down payment of the payment simulation run on the first purpose.

If the determining unit 431 determines the first bank account information to be absent, the display control unit 434 controls the display 12 of the user terminal 10 to display an interface capable of receiving input of the amount of money. If the receiving unit 432 receives an input indicating that the first balance is not permitted to be allocated for the down payment, the display control unit 434 controls the display 12 of the user terminal 10 to display an interface capable of receiving input of the amount of money. The interface may be a dropdown, a textbox, or the like.

The computing unit 435 performs a computation based on the set conditions and down payment and runs a simulation. For example, the computing unit 435 is capable of computing the borrowing limit and an interest rate using a certain formula having the set conditions as parameters. The computing unit 435 is further capable of computing compound interest based on the down payment, the borrowing limit, and the interest rate and capable of computing the monthly installments.

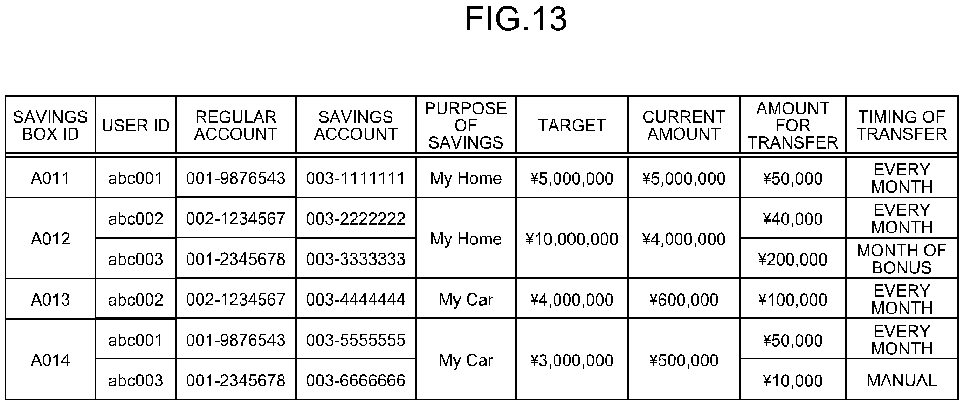

The savings box information 222 used by the simulation system 2 will now be described. FIG. 13 is an illustrative drawing of the savings box information. As illustrated in FIG. 13, for example, the current amount "5,000,000 Yen" of a savings account the account number of which is "003-1111111", and a user "abc001", and a purpose of the savings "My Home" are associated with one another in the savings box information 222.

Furthermore, users "abc002" and "abc003", a purpose of the savings "My Home", the current amount "4,000,000 Yen " of savings accounts, the account numbers of which are "003-2222222" and "003-3333333", are associated with one another in the savings box information 222.

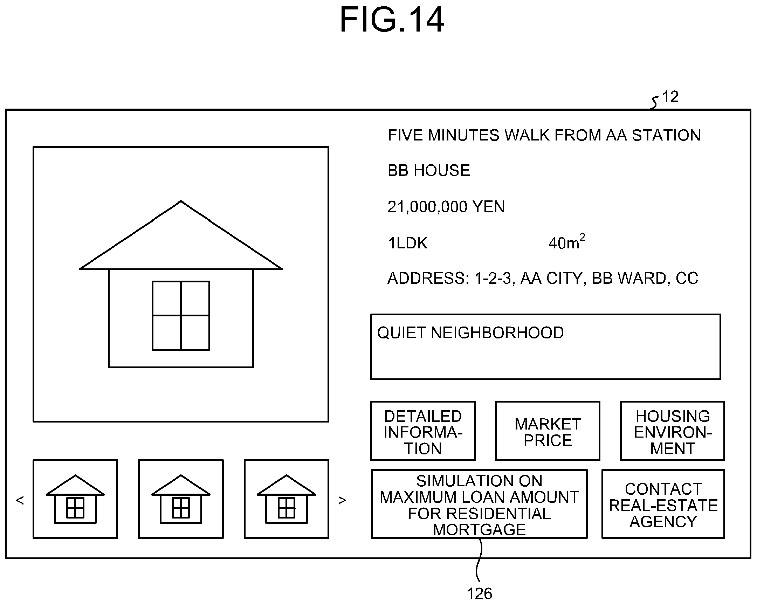

The following is an example in which the simulation system 2 runs a simulation on a residential mortgage. To provide commodity information, the display control unit 434 controls the display 12 of the user terminal 10 to display a house information page. The house information page will now be described with reference to FIG. 14. FIG. 14 is an example drawing of a house information page.

As illustrated in FIG. 14, the house information page displays a photo of a house, photos of similar houses, the location, the name, the floor plan, the price, and other information pieces. The house information page further displays buttons to jump to pages providing additional information such as the details, the market prices, and the housing environment. The house information page further displays a simulation start button 126. In response to a tap on the simulation start button 126, the display control unit 434 controls the display 12 to display a chat window.

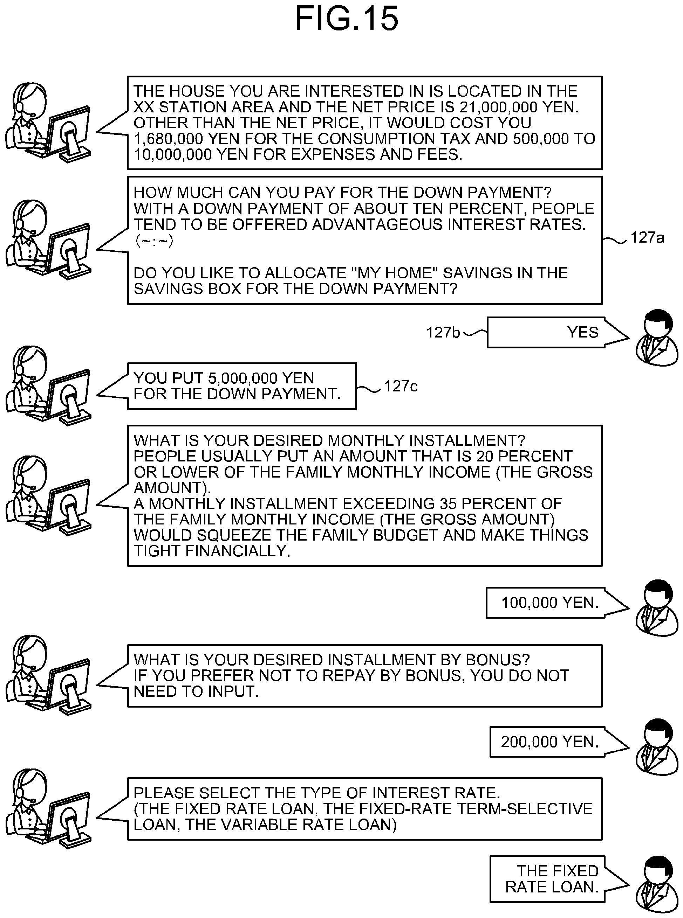

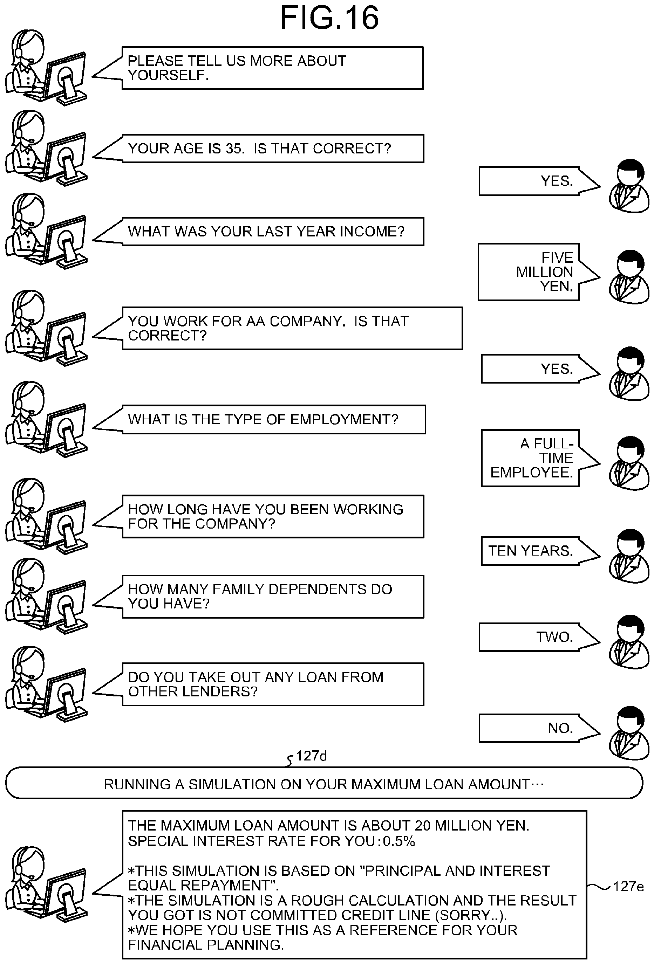

The chat window will now be described with reference to FIG. 15 and FIG. 16. FIG. 15 and FIG. 16 are example drawings of a chat window. As illustrated in FIG. 15, a user inputs messages by chatting on the display 12 to answer questions from a chatbot. The simulation device 40 acquires messages input by the user and sets conditions and others.

When a chat window is displayed, the determining unit 431 refers to the savings box information 222 and determines the presence or absence of bank account information of the user, the purpose of which is house purchase. When the user ID of the user is "abc001", the determining unit 431 refers to the savings box information 222 illustrated in FIG. 13 and confirms the presence of bank account information of the user "abc001", the purpose of the savings of which is "My Home".

When the determining unit 431 determines the presence of the bank account information, the display control unit 434 controls a message 127a to be displayed to ask whether to allocate the balance of the bank account information for the down payment. If the user inputs a positive message 127b for the message 127a, the display control unit 434 controls a message 127c to be displayed to inform the user of the balance to be allocated for the down payment.

As illustrated in FIG. 15, the display control unit 434 further controls additional messages to be displayed to encourage the user to input desired monthly installments, installments on bonus, and the type of interest rate. As illustrated in FIG. 16, the display control unit 434 controls additional messages to be displayed to encourage the user to input information such as his/her age, the annual income, the company name he/she works for, the type of employment, the period of employment, the number of family dependents, and the presence or absence of any loan from other lenders.

The computing unit 435 acquires conditions for the simulation from the messages input by the user and runs the simulation. During computation of the computing unit 435, the display control unit 434 controls a message 127d to be displayed to indicate that the simulation is running. Upon completion of computation by the computing unit 435, the display control unit 434 controls a message 127e to be displayed to indicate results of the simulation.

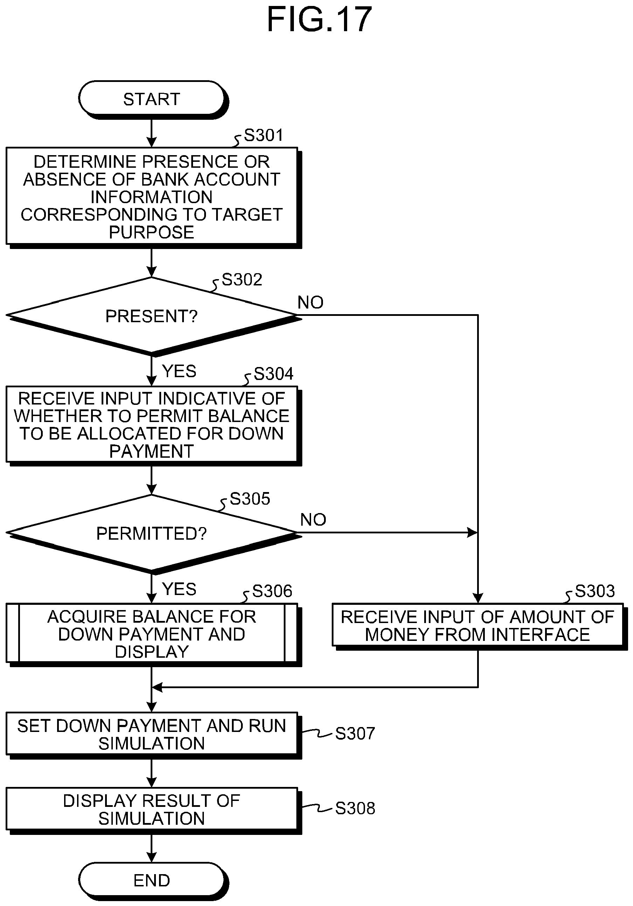

FIG. 17 is an example flowchart that illustrates processing to run a simulation. As illustrated in FIG. 17, the determining unit 431 determines the presence or absence of bank account information including a target purpose (S301). In the absence of bank account information corresponding to the target purpose (No at S302), the receiving unit 432 receives an input of the amount of money to be allocated for a down payment from an interface (S303).

In the presence of bank account information corresponding to the target purpose (Yes at S302), the receiving unit 432 receives an input indicative of whether to permit the balance of the bank account information to be allocated for the down payment (S304). If the receiving unit 432 receives an input indicating that the balance is not permitted to be allocated for the down payment (No at S305), the receiving unit 432 receives an input indicative of the amount of money to be allocated for the down payment from the interface (S303).

If the receiving unit 432 receives an input indicating that the balance is permitted to be allocated for the down payment (Yes at S305), the setting unit 433 acquires a first balance included in the first bank account information or the sum of the first balance and the interest calculated at an adapted interest rate, as the down payment and causes the acquired amount to be displayed (S306). The computing unit 435 sets the down payment and runs the simulation (S307), and the display 12 of the user terminal 10 displays results of the simulation (S308).

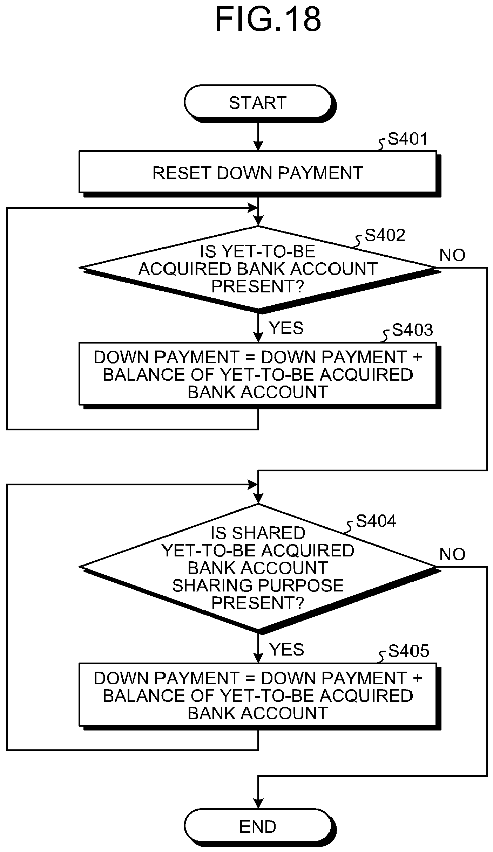

FIG. 18 is an example flowchart that illustrates processing to acquire a balance as a down payment. The setting unit 433 resets the down payment at, for example, zero (S401). In the presence of a bank account the balance of which is yet to be acquired, of bank accounts corresponding to the target purpose (Yes at S402), the setting unit 433 acquires the balance of the yet-to-be acquired bank account or acquires the sum of the balance of the bank account and the interest calculated at an adapted interest rate, and adds the acquired amount to the down payment (S403). In the absence of any bank account the balance of which is yet to be acquired (No at S402), the setting unit 433 proceeds the processing.

In the presence of a shared, yet-to-be acquired bank account sharing the target purpose (Yes at S404), the setting unit 433 acquires the balance of the shared, yet-to-be acquired bank account and adds the balance to the down payment (S405). In the absence of any shared bank account, the balance of which is yet to be acquired, (No at S404), the setting unit 433 ends the processing. The shared bank account is bank account information shared by a plurality of users, such as "A012" in FIG. 13.

The simulation device 40 is capable of setting an advantageous interest rate. Before running a simulation on a loan repayment, the determining unit 431 checks for a savings account sharing the purpose with the simulated loan type. In the presence of such a bank account, the determining unit determines that an advantageous interest rate is adapted to the loan type. The computing unit provides processing (discount processing) to deduct a certain amount from the standard interest rate and runs a simulation on the loan repayment at the advantageous interest rate.

### Modification

An exemplary simulation on a residential mortgage using the simulation system 2 has been described as above. As a modification, a simulation of a used car loan using the simulation system 2 will now be described.

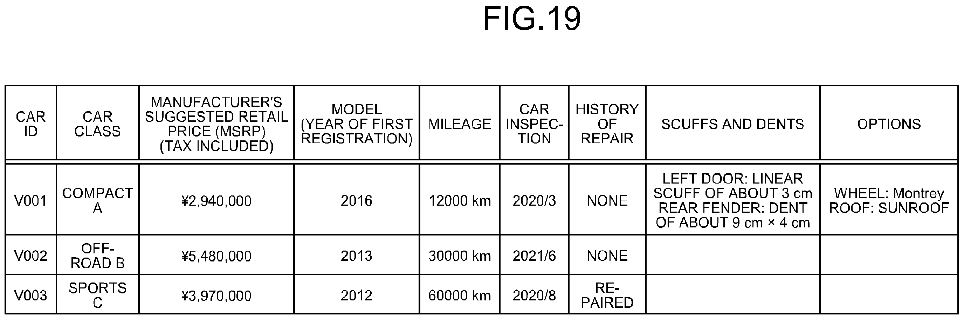

The storage 42 of the simulation device 40 stores car information as the commodity information 421. FIG. 19 is an illustrative drawing of car information. As illustrated in FIG. 19, the car information includes, for each car ID, the car class, the manufacturer's suggested retail price (MSRP), the model, the mileage, car inspection, history of repair, scuffs and dents, options, and other information pieces. As illustrated in FIG. 19, the car information includes information of a car whose car ID is "V001", car class is "compact A", the manufacturer's suggested retail price (MSRP) "2,940,000 Yen", model "2016", car inspection "2020/3", and history of repair "none".

The car information further includes information that the car, the car ID of which is "V001", has "left door: a linear scuff of about three centimeters" as scuffs and dents. The car information further includes information that the car whose car ID is "V001" has "roof: sunroof" as options.

As with the simulation on a residential mortgage, the simulation device 40 causes the display 12 of the user terminal 10 to display various windows to provide commodity information and results of the simulation.

Upon receipt of an operation to start a simulation through the display 12 of the user terminal 10, the determining unit 431 determines the presence or absence of first bank account information the first purpose of which is purchase of a certain sort of commodity. For example, upon receipt of an operation to start a simulation on a used car loan, the determining unit 431 determines the presence or absence of bank account information whose purpose of the savings is "My Car".

The display control unit 434 controls the display 12 of the user terminal 10 to display information relating to a certain sort of commodity. For example, the display control unit 434 causes information relating to used cars to get displayed. Moreover, when the display control unit 434 recognizes that an input image includes the certain commodity, the display control unit 434 causes the display 12 of the user terminal 10 to display the image and information relating to the commodity. The display control unit 434 controls information relating to the conditions of the commodity or its options to get displayed in a manner superimposed on the image. The display control unit 434 is therefore capable of controlling information of the car to be displayed in a manner superimposed on an image of the car using augmented reality (AR).

When the display control unit 434 recognizes that an image input with a camera function or similar functions of the user terminal 10 includes a certain used car, the display control unit 434 controls car information of the used car to get displayed in a manner superimposed on the image. Additionally, the display control unit 434 can control information of the balance, acquired from the bank account information, and a certain message to get displayed.

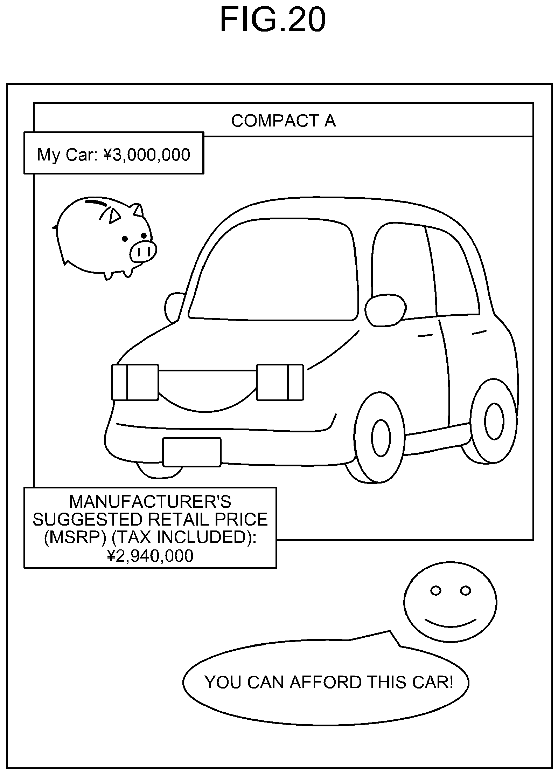

FIG. 20 illustrates an exemplary car information page. As illustrated in FIG. 20, the display control unit 434 controls the display 12 to display a car information page. The car information page displays the balance "3,000,000 Yen" and the MSRP "2,940,000 Yen" in a manner superimposed on the image of the car. If the balance is larger than the MSRP, the car information page displays a message "You can afford this car!" indicating that the user is capable of purchasing the car in a lump sum.

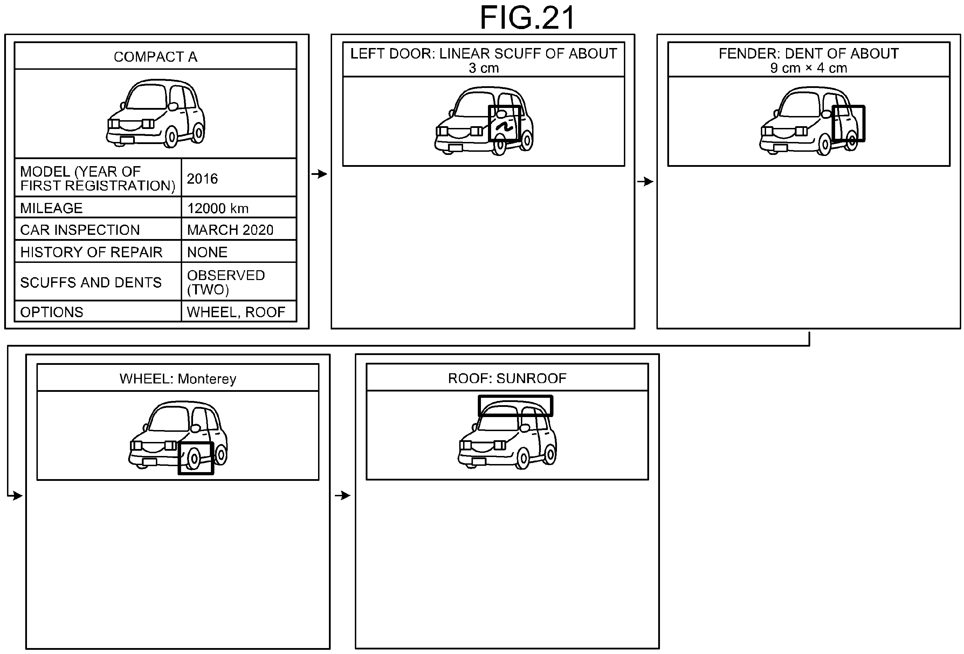

The display control unit 434 is further capable of controlling a list of car information pieces or the details of each car information piece to get displayed on the car information page. FIG. 21 illustrates an exemplary car information page. As illustrated in FIG. 21, the car information page displays a list of car information pieces.

For example, in displaying scuffs and dents included in the car information, the display control unit 434 can put a frame around the damaged part and causes the frame to get displayed in a manner superimposed on the image. For example, the display control unit 434 is capable of emphasizing information of scuffs and dents such as "left door: a linear scuff of about three centimeters" by putting a frame around the left door area. The display control unit 434 is further capable of controlling an area relating to an option part to get displayed in the similar manner.

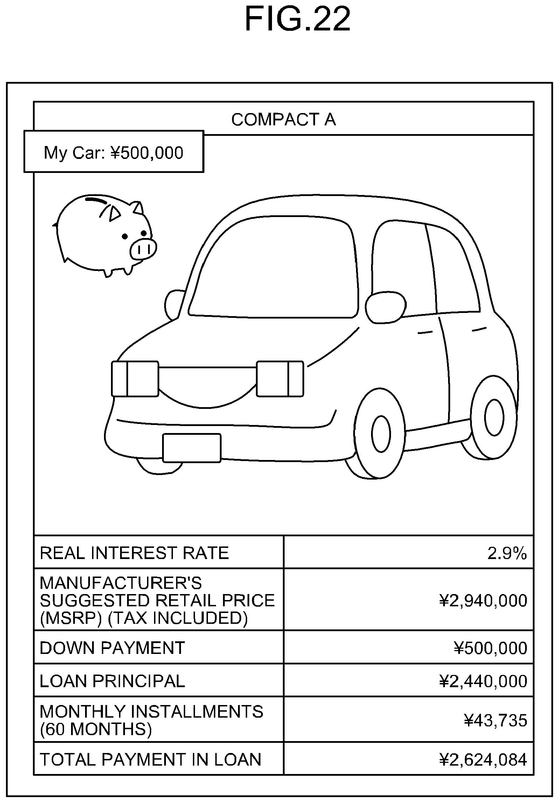

Furthermore, as illustrated in FIG. 22, the display control unit 434 is capable of controlling results of a simulation to be displayed along with an image of the car. FIG. 22 illustrates an exemplary car information page.

For example, a swipe gesture on a savings box icon on the car information page allows the simulation device 40 to start a simulation with the balance of bank account information allocated for the down payment. The display control unit 434 controls results of the simulation including, for example, the principal of the loan, a monthly installment, the total payment of the loan to get displayed. When the down payment is manually input, the simulation device 40 sets the down payment at the input amount and runs a simulation once again, and updates the results of the simulation.

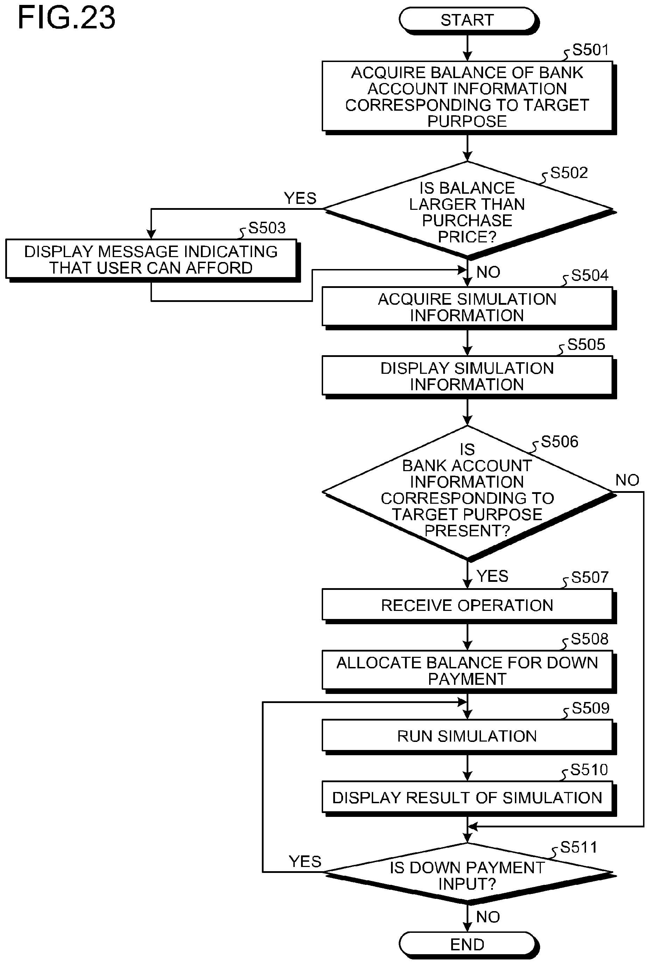

FIG. 23 is an example flowchart that illustrates processing to run a simulation. As illustrated in FIG. 23, the determining unit 431 acquires the balance of bank account information corresponding to a target purpose (S501) and determines whether the balance exceeds the purchase price (S502). If the balance exceeds the purchase price (Yes at S502), the display control unit 434 controls a message indicating that the user can afford the commodity to get displayed (S503).

If the balance is below the purchase price, the display control unit 434 acquires information to be used for a simulation, such as a purchase price (S504), and causes the information to be displayed (S505). In the absence of bank account information corresponding to the target purpose (No at S506), the simulation device 40 stands by for an input of a down payment (S511).

In the presence of bank account information corresponding to the purpose, the receiving unit 432 receives a certain operation (S507). The operation received by the receiving unit 432 is a swipe on an icon, a click of a button, and other gestures, and the operation indicates permission of the user to allocate the balance for the down payment.

When the receiving unit 432 receives the operation, the computing unit 435 sets the down payment at the balance (S508) and runs a simulation (S509). The display control unit 434 controls the results of the simulation to get displayed (S510). If the down payment is input (Yes at S511), the computing unit 435 runs the simulation using the input down payment.

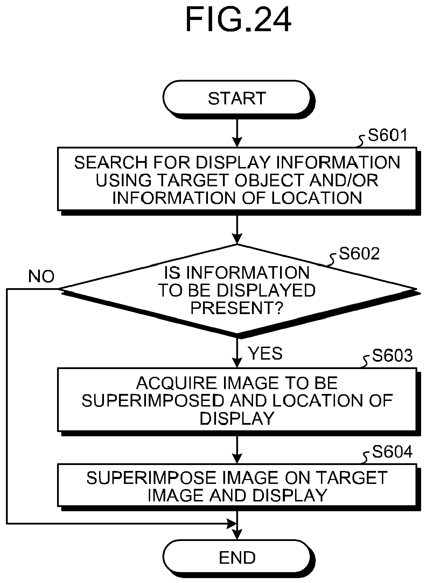

FIG. 24 is an example flowchart that illustrates processing to make an AR display. The simulation device 40 searches for display information using an image obtained by imaging an object and/or location information (S601). For example, the display control unit 434 recognizes a car using a camera function or a similar function of the user terminal 10. In the presence of car information matching the car, the display control unit 434 searches the car information.

In the absence of information to be displayed (No at S602), the simulation device 40 ends the processing. In the presence of information to be displayed (Yes at S602), the display control unit 434 acquires an image to be superimposed and the location of display (S603), superimposes the image on a target image, and causes the resulting image to get displayed (S604). For example, the display control unit 434 acquires an image, in which a damaged area having a scuff is put in a frame, and the location of the scuff, superimposes the image on an image of the car, and causes the resulting image to get displayed.

As described above, the simulation device 40 refers to a storage storing therein bank account information having a user, the balance of a bank account, and a purpose of the savings associated with one another, and determines the presence or absence of first bank account information associated with a first user and a first purpose. Upon determination of the presence of the first bank account information, the simulation device 40 allocates a first balance included in the first bank account information for a down payment of a payment simulation run on the first purpose. This process allows the simulation device 40 to run a simulation without having a user input simulation conditions.

The simulation device 40 receives an input indicative of whether to permit the first balance to be allocated for the down payment of the payment simulation run on the first purpose. Upon receipt of an input indicating that the first balance is permitted to be allocated for the down payment, the simulation device 40 allocates the first balance acquired from the storage for the down payment of the simulation. This manner allows the simulation device 40 to set a down payment upon request of the user.

The simulation device 40 determines the presence or absence of first bank account information associated with a plurality of users and a first purpose. Upon determination of the presence of the first bank account information, the simulation device 40 allocates the sum of the balances of bank accounts of the respective users included in the first bank account information for a down payment of a payment simulation run on the first purpose. This manner allows the simulation device 40 to run a simulation of joint purchase by a plurality of users without inputting a down payment.

Upon determination of the absence of the first bank account information, the simulation device 40 causes the display 12 of the user terminal 10 to display an interface capable of receiving input of the amount of money. Likewise, upon receipt of an input indicating that the first balance is not permitted to be allocated for the down payment, the simulation device 40 causes the display 12 of the user terminal 10 to display an interface capable of receiving input of the amount of money. The simulation device 40 sets the down payment of the simulation at the amount input to the interface. This manner allows the simulation device 40 to manually set a down payment.

Upon receipt of an operation to start a simulation from the display 12 of the user terminal 10, the simulation device 40 determines the presence or absence of first bank account information the first purpose of which is purchase of a certain sort of commodity. This process allows the simulation device 40 to run simulations for a plurality of sorts of commodity.

The simulation device 40 causes the display 12 of the user terminal 10 to display information relating to a certain sort of commodity. If the simulation device 40 recognizes that a certain commodity is included in an input image, the simulation device 40 causes the display 12 of the user terminal 10 to display the image and information relating to the commodity. Furthermore, the simulation device 40 superimposes conditions of the commodity or information relating to options on the image and causes the resulting image to get displayed. This manner allows the simulation device 40 to cause commodity information to be intuitively displayed using AR.

Components of devices in the drawings are not necessarily physically configured as depicted. The specific modes of separation and integration of the devices are not limited to the illustrated modes, and the whole of or a part of the device is allowed to be configured in a functionally or physically dispersed or integrated manner in any unit, based on various loads and conditions of use.

All kinds of or any kind of processing function executed by the financial transaction management device 20 and the simulation device 40 may be executed by a central processing unit (CPU) (or a microcomputer such as a micro processing unit (MPU) and a micro controller unit (MCU)). All kinds of or any kind of processing function may be executed by a computer program analyzed and executed by a CPU (or a microcomputer such as an MPU and an MCU) or by hardware using hard-wired logic. Processing functions of the financial transaction management device 20 and the simulation device 40 may be executed with a plurality of computers cooperating in the cloud computing environment.

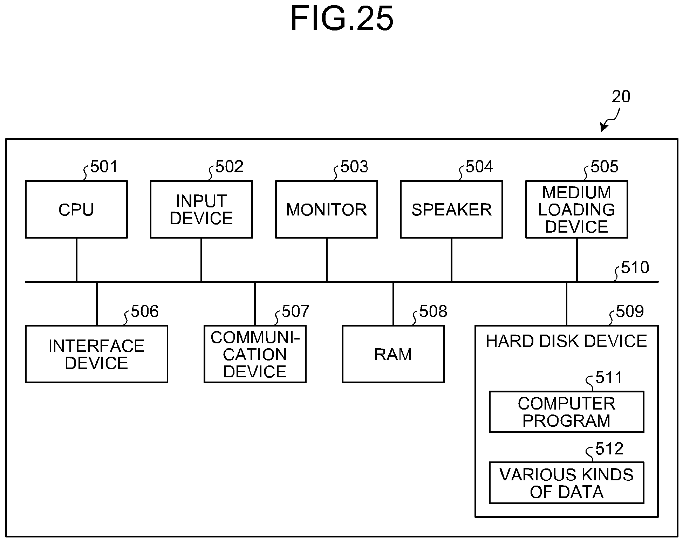

The various kinds of processing described in the above embodiments can be implemented with a prepared computer program executed by a computer. The following is an example of such a computer (hardware) executing a computer program having the same functions as those of the above embodiments. FIG. 25 is a block diagram of an exemplary hardware configuration of the financial transaction management device 20 according to the embodiments. The simulation device 40 may have the same hardware configuration as the example configuration illustrated in FIG. 25.

As illustrated in FIG. 25, the financial transaction management device 20 includes a CPU 501 executing various kinds of computing processing, an input device 502 receiving data input, a monitor 503, and a speaker 504. The financial transaction management device 20 further includes a medium loading device 505 loading, for example, a computer program from a memory medium, an interface device 506 connecting with various devices, and a communication device 507 communicably connected with external devices via wired or wireless communication. The financial transaction management device 20 further includes a random access memory (RAM) 508 transiently storing therein various kinds of information and a hard disk device 509. Each unit (501 to 509) in the financial transaction management device 20 is connected with a bus 510.

The hard disk device 509 stores therein a computer program 511 to execute the authentication unit 231, the request unit 232, the receiving unit 233, the notification unit 234, the acquisition unit 235, and the provision unit 236, described in the above embodiments. The hard disk device 509 further stores therein various kinds of data 512 (such as the authentication information 221 and the savings box information 222) referred by the computer program 511. For example, the input device 502 receives an input of operation information from an operator of the financial transaction management device 20. The monitor 503 displays, for example, various kinds of screens to receive operations of the operator. The interface device 506 is connected with, for example, a printer. The communication device 507 is connected with a communication network such as a local area network (LAN) and transmits and receives various kinds of information to and from external devices via the communication network.

The CPU 501 loads the computer program 511 stored in the hard disk device 509 and deploys the program on the RAM 508 to execute the program and performs various kinds of processing. The computer program 511 is not necessarily stored in the hard disk device 509. For example, the computer program 511 may be stored in a memory medium readable by the financial transaction management device 20, and loaded and executed. Examples of the memory medium readable by the financial transaction management device 20 include a portable memory medium such as a compact disc - read only memory (CD-ROM), a digital versatile disc (DVD), and a universal serial bus (USB) memory, a semiconductor memory such as a flash memory, and a hard disk drive. The computer program 511 may be stored in a device connected with a public line, the Internet, a LAN, and the like. The financial transaction management device 20 may load the computer program 511 from these devices and execute.

## Claims

1. A program (511) for supporting a simulation that causes a computer (20) to execute a process comprising:
determining (S301) a presence or absence of first bank account information associated with a first user and a first purpose, by referring to a storage (22) storing therein bank account information in which a user, a balance of a bank account, and a purpose of savings are associated with one another; and
upon determination of the presence of the first bank account information, allocating (S307) a first balance included in the first bank account information for a down payment of a payment simulation on the first purpose.

2. The program (511) for supporting a simulation according to claim 1, wherein the process further includes:
receiving (S304) an input indicative of whether to permit the first balance to be allocated for a down payment of the payment simulation on the first purpose, wherein
upon receipt of an input indicating that the first balance is permitted to be allocated for the down payment, the allocating (S307) allocates the first balance acquired from the storage (22) for the down payment of the simulation.

3. The program (511) for supporting a simulation according to claim 2, wherein the process further includes:
when the determining determines an absence of the first bank account information, or when the receiving receives an input indicating that the first balance is not permitted to be allocated for the down payment, causing (S303) an interface capable of receiving an input of an amount of money to be displayed on a display (12), wherein
the allocating (S307) allocates the amount of money input to the interface for the down payment of the simulation.

4. The program (511) for supporting a simulation according to claim 1, wherein
the determining (S404) includes determining a presence or absence of first bank account information associated with a plurality of users and a first purpose, and
upon determination of the presence of the first bank account information, the allocating (S405) includes allocating a sum of balances of bank accounts of the respective users included in the first bank account information for a down payment of a payment simulation on the first purpose.

5. The program (511) for supporting a simulation according to any one of claims 1 to 4, wherein the process further includes:
causing information relating to a certain sort of commodity to be displayed on a display (12), wherein
upon receipt of an operation to start a simulation through the display (12), the determining determines a presence or absence of the first bank account information the first purpose of which is purchase of the certain sort of commodity.

6. The program (511) for supporting a simulation according to claim 5, wherein, upon recognition that an input image includes a certain commodity, the causing information to be displayed includes causing the display (12) to display the image and information relating to the commodity.

7. The program (511) for supporting a simulation according to claim 6, wherein the causing information to be displayed includes causing information relating to a condition of the commodity or relating to an option to be displayed in a manner superimposed on the image.

8. A method for supporting a simulation comprising:
determining (S301) a presence or absence of first bank account information associated with a first user and a first purpose, by referring to a storage (22) storing therein bank account information in which a user, a balance of a bank account, and a purpose of savings are associated with one another; and
upon determination of the presence of the first bank account information, allocating (S307) a first balance included in the first bank account information for a down payment of a payment simulation on the first purpose.

9. A simulation device (40), comprising:
a determining unit (431) configured to determine a presence or absence of first bank account information associated with a first user and a first purpose, by referring to a storage (42) storing therein bank account information in which a user, a balance of a bank account, and a purpose of savings are associated with one another; and
a setting unit (433) configured to allocate a first balance included in the first bank account information for a down payment of a payment simulation on the first purpose, upon determination of the presence of the first bank account information.

10. The simulation device (40) according to claim 9, further including:
a receiving unit (432) configured to receive an input indicative of whether to permit the first balance to be allocated for a down payment of the payment simulation on the first purpose, wherein
when the receiving unit (432) configured to receive an input indicating that the first balance is permitted to be allocated for the down payment, the setting unit (433) is configured to allocate the first balance acquired from the storage (42) for the down payment of the simulation.

11. The simulation device (40) according to claim 10, further including:
a display control unit (434) configured to control an interface capable of receiving an input of an amount of money to be displayed on a display (12), when the determining unit determines an absence of the first bank account information, or when the receiving unit receives an input indicating that the first balance is not permitted to be allocated for the down payment, wherein
the setting unit (433) configured to allocate the amount of money input to the interface for the down payment of the simulation.

12. The simulation device (40) according to claim 9, wherein
the determining unit (431) is configured to determine a presence or absence of first bank account information associated with a plurality of users and a first purpose, and
upon determination of the presence of the first bank account information, the setting unit (433) is configured to allocate a sum of balances of bank accounts of the respective users included in the first bank account information for a down payment of a payment simulation on the first purpose.

13. The simulation device (40) according to any one of claims 9 to 12, wherein
the display control unit (434) is configured to control information relating to a certain sort of commodity to be displayed on a display (12), and
upon receipt of an operation to start a simulation through the display (12), the determining unit (431) is configured to determine a presence or absence of the first bank account information the first purpose of which is purchase of the certain sort of commodity.

14. The simulation device (40) according to claim 13, wherein, upon recognition that an input image includes a certain commodity, the display control unit (434) is configured to control the display (12) to display the image and information relating to the commodity.

15. The simulation device (40) according to claim 14, wherein the display control unit (434) is configured to control information relating to a condition of the commodity or relating to an option to be displayed in a manner superimposed on the image.
